# EUROPÄISCHE PATENTANMELDUNG

(11) **EP 1 020 311 A2**
(43) Veröffentlichungstag der Anmeldung: **19.07.2000**
(21) Anmeldenummer: 00100430.8
(22) Anmeldetag: 10.01.2000
(51) Int. Cl.: B60J 7/047, B60J 7/057

(54) **Öffnungsfähiges Fahrzeugdach**

(30) Priorität: 15.01.1999 DE 19901274
(71) Anmelder: Webasto Vehicle Systems International GmbH, 82131 Stockdorf (DE)
(72) Erfinder: Hirschvogel, Engelbert, 89928 Hofstetten (DE); Losert, Andreas, 82211 Herrsching (DE); Weissbrich, Alfons, Dr., 38116 Braunschweig (DE); Klesing, Joachim, 80992 München (DE); Färber, Manfred, 82407 Wielenbach (DE); Rau, Achim, 73434 Aalen (DE); Vogl, Werner, 80686 München (DE)
(74) Vertreter: Wiese, Gerhard

(57) **Zusammenfassung**

Die Erfindung betrifft ein öffnungsfähiges Fahrzeugdach, das mit mehreren miteinander verbundenen schwenkbaren Dachelementen, die in der Schließstellung einen flächigen Verbund bilden, um eine Dachöffnung zu verschließen, und zwei Antriebselemente umfassen, die jeweils von einem Motor in Dachlängsrichtung zu einer Öffnungsbewegung verschiebbar sind, wobei die Dachelemente so ausgebildet sind, daß sie wahlweise von vorn und/oder von hinten unter Ausschwenken zu einem Paket zusammenschiebbar sind, das in Dachlängsrichtung verschiebbar ist, sowie einem Bedienelement (24) zum Steuern der Motoren versehen ist. Das Bedienelement (24) umfaßt zwei Schieberegler, die jeweils einen oder beide der Motoren steuern und deren Schieber (28, 30) relativ zueinander in einer Ebene, jedoch nicht aneinander vorbei verschiebbar sind. Das Bedienelement ist so ausgebildet, daß die Position jedes Schiebers jeweils in etwa der Position des entsprechenden Antriebselements zugeordnet ist und das zusammengeschobene Paket an dem Bedienelement simuliert wird, um eine Kollision der Antriebselemente auszuschließen.

## Beschreibung

Die Erfindung betrifft ein öffnungsfähiges Fahrzeugdach gemäß dem Oberbegriff von Anspruch 1, insbesondere ein Lamellen- oder Faltdach.

Ein solches gattungsgemäßes Lamellendach ist beispielsweise aus DE 43 29 583 C1 bekannt, wobei dort jedoch keine Angaben bezüglich der Ausgestaltung eines entsprechenden Bedienelements zur Steuerung eines solchen Lamellendaches zu finden sind.

Aus DE 42 38 693 C1 ist ein Schiebehebedach bekannt, das zwei von einem Motorantrieb angetriebene verstellbare Deckel umfaßt. Ausgehend von der Schließstellung, in welcher die Deckel horizontal hintereinander liegend eine Dachöffnung verschließen, können die beiden Deckel in eine Lüftungsstellung gebracht werden, indem der vordere Deckel mit seiner Hinterkante nach oben und gleichzeitig der hintere Deckel mit seiner Vorderkante nach unten verschwenkt wird. In dieser Lüftungsstellung sind die beiden Deckel unabhängig voneinander in Dachlängsrichtung verstellbar. Zur Steuerung des Motorantriebs ist ein Bedienelement mit zwei manuell bedienbaren Schaltelementen vorgesehen, die verschwenkbar und verschiebbar angeordnet sind und deren Stellung in etwa der Stellung des dem jeweiligen Schaltelement zugeordneten Deckels entspricht. Die verschwenkte Schaltelementstellung entspricht dabei der Lüfterstellung. Die beiden Schaltelemente sind derart gekoppelt, daß das Verschwenken des einen Schaltelements ein entsprechendes paralleles Verschwenken des anderen Schaltelements nach sich zieht. In dieser Stellung sind die Schaltelemente gegeneinander verschiebbar, um eine entsprechende relative Verschiebung der beiden Deckel zueinander zu bewirken.

Aus DE 43 37 745A1 ist ein öffnungsfähiges Fahrzeugdach bekannt, welches zwei verstellbare Deckel umfaßt, wobei der vordere Deckel ausstellbar und verschiebbar ist, während der hintere Deckel lediglich bezüglich der Dachöffnung und dem vorderen Deckel verschiebbar ist. Das zur Steuerung der Deckelbewegung vorgesehene Bedienelement umfaßt zwei parallel zueinander geführte Schieberegler, die jeweils einen der beiden Deckel steuern. Die Verschieberichtung der beiden Schieberegler entspricht der Richtung der Deckelbewegung. Die Schieberegler sind so ausgebildet, daß sie nicht aneinander vorbeigeschoben werden können, um eine Kollision der Deckel zu verhindern. In der Stellung, in welcher die beiden Schieberegler aufeinander zu geschoben sind, können sie miteinander arretiert werden, so daß die beiden Deckel gemeinsam verfahren werden können.

Es ist Aufgabe der vorliegenden Erfindung, ein öffnungsfähiges Fahrzeugdach gemäß dem Oberbegriff von Anspruch 1, insbesondere ein Lamellendach oder Faltdach, zu schaffen, welches ein Bedienelement umfaßt, das eine einfache und sichere Bedienung erlaubt.

Diese Aufgabe wird erfindungsgemäß gelöst durch ein öffnungsfähiges Fahrzeugdach gemäß Anspruch 1. Weitere bevorzugte Ausführungsformen ergeben sich aus den Unteransprüchen.

Bei dieser erfindungsgemäßen Lösung ist vorteilhaft, daß auf einfache, logische und übersichtliche Art die Realisierung der vielfältigen Öffnungsmöglichkeiten durch den Bediener erlaubt wird, wobei auf einfache Weise ein Kollisionsschutz realisiert ist.

Vorzugsweise bilden die Dachelemente ein Lamellendach, wobei sie parallel zueinander ausgestellt sind, wenn sie ein zusammengeschobenes Paket bilden. In bevorzugter weiterer Ausgestaltung ist dabei die Längsabmessung der Schieber so gewählt, daß bei maximal aufeinander zu geschobenen Schiebern die Antriebselemente gerade so weit verstellt sind, daß ein maximal zusammengeschobenes Paket gebildet wird. Dies stellt eine besonders einfache Realisierung des Kollisionsschutzes dar.

Mit einer alternativen Ausgestaltung ist zwischen den beiden Schiebern ein Distanzstück vorgesehen, dessen Längsabmessung so gewählt ist, daß bei maximal aufeinander zugeschobener Schiebern die Antriebselemente gerade so weit verstellt sind, daß ein maximal zusammengeschobenes Paket gebildet wird.

Um einen möglichst einfachen Aufbau zu erlauben, sind vorzugsweise die Schieber für ihre Schiebebewegung in einer gemeinsamen Führungsbahn geführt.

Um ein einfaches Schließen des Fahrzeugdaches zu gewährleisten, umfaßt das Bedienelement vorzugsweise einen Schalter, der bei Betätigung aus jeder Stellung veranlaßt, daß die Dachelemente in ihre Schließstellung gebracht werden. Bei der Ausführungsform mit Distanzstück kann der Schalter an dem Distanzstück vorgesehen sein.

Im folgenden sind zwei Ausführungsformen der Erfindung anhand der Zeichnungen näher erläutert. Es zeigen:
- Fig. 1A: einen schematischen Längsschnitt durch ein Fahrzeugdach,
- Fig. 1B: die Aufsicht auf das Bedienelement eines erfindungsgemäßen Fahrzeugdaches in einer ersten Ausführungsform in der Schließstellung, wobei ferner die entsprechende Stellung der Dachelemente angedeutet ist,
- Fig. 2: die Schnittansicht entlang der Linie II-II in Fig. 1,
- Fig. 3: eine Ansicht wie Fig. 1B, wobei jedoch eine erste Öffnungsstellung gezeigt ist,
- Fig. 4: eine Ansicht wie Fig. 1B und 3, wobei jedoch eine zweite Öffnungsstellung dargestellt ist, und
- Fig. 5: eine Ansicht wie Fig. 1B, wobei jedoch eine zweite Ausführungsform eines Bedienelements dargestellt ist.

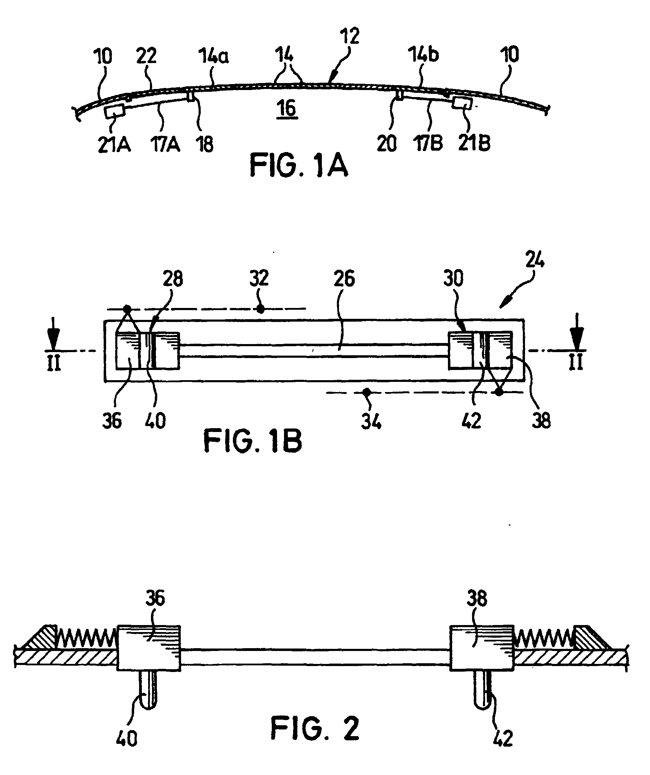

In Fig. 1A und B ist eine erste Ausführungsform eines Bedienelements für ein Lamellendach in der Schließstellung des Lamellendachs dargestellt. In einer festen Dachhaut 10 eines Kraftfahrzeugs ist eine von einem Verbund 12 aus über Kulissenführungen miteinander verbundenen Lamellen 14 verschließbare Dachöffnung 16 ausgebildet. Die vorderste und die hinterste Lamelle 14a bzw. 14b des Lamellenverbunds 12 ist jeweils mit einem Antriebselement 18 bzw. 20 versehen, welches über drucksteife Antriebskabel 17A bzw. 17B jeweils von einem Elektromotor 21A bzw. 21B zu einer Verschiebung in Dachlängsrichtung angetrieben werden. Vor der vordersten Lamelle 14a des Lamellenverbunds 12 ist eine ausschwenkbare, aber nicht verschiebbare Windabweiserlamelle 22 angeordnet. Die Lamellen 14 sind über entsprechende Kulissenbahnen und darin eingreifende Kulissenstifte derart miteinander verbunden, daß, ausgehend von der in Fig. 1 dargestellten Schließstellung, eine Verschiebebewegung des hinteren Antriebselements 20, beginnend mit der letzten Lamelle 14b, ein Ausstellen der Lamellen 14 mit ihren Hinterkanten und ein Zusammenschieben der Lamellen 14 nach vorn bewirkt, wobei schließlich alle Lamellen 14 in paralleler Ausrichtung zueinander mit ihren Hinterkanten nach oben zu einem Paket zusammengeschoben werden. In entsprechender Weise bewirkt eine Verschiebung des vorderen Antriebselements 18 nach hinten, ebenfalls ausgehend von der letzten Lamelle, ein Ausstellen der Lamellen 14 mit ihren Hinterkanten, wobei sie schließlich in entsprechender Weise ein an dem hinteren Ende der Dachöffnung 16 zusammengeschobenes Lamellenpaket bilden. Die Lamellenmechanik erlaubt auch ein gleichzeitiges Öffnen des Lamellenverbunds 12 von vorn und von hinten mittels gleichzeitigem Verschieben des vorderen und des hinteren Antriebselements 18 bzw. 20 zu der Mitte der Dachöffnung 16 hin, was schließlich zu einem in der Mitte der Dachöffnung 16 zusammengeschobenen Lamellenpaket führt. Ein solches am vorderen oder hinteren Ende bzw. in der Mitte der Dachöffnung 16 gebildetes Lamellenpaket kann schließlich auch durch parallele Bewegung der Antriebselemente 18 und 20 als Ganzes in Dachlängsrichtung verschoben werden.

Der bisher beschriebene Aufbau und die bisher beschriebene Funktion eines solchen Lamellendaches sind an sich bekannt, z.B. aus DE 43 29 583 C2. An geeigneter Stelle im Fahrzeuginnenraum, z.B. im vorderen Dachbereich oder an der Mittelkonsole, ist ein insgesamt mit 24 bezeichnetes Bedienelement vorgesehen, das zwei in einer gemeinsamen geraden Längsführung 26 verschiebbare Schieber 28 und 30 umfaßt, die jeweils ein Schiebepotentiometer 32 bzw. 34 betätigen. Die jeweilige Potentiometerstellung gibt eine Sollstellung für die Antriebselemente 18, 20 vor, die über eine entsprechende Steuerelektronik (nicht dargestellt) von den Elektromotoren angefahren wird. Die Schieber 28, 30 umfassen jeweils eine Basis 36 bzw. 38, von welcher ein Betätigungselement 40 bzw. 42 absteht, mittels welchem der Bediener die Schieber 28 bzw. 30 entlang der Führung 26 verschieben kann, um den Lamellenverbund 12 zu öffnen bzw. zu schließen. Die Zuordnung zwischen der Position der Antriebselemente 18 bzw. 20 und des entsprechenden Schiebers 28 bzw. 30 ist so gewählt, daß sich das Antriebselement 18 bzw. 20 in der Schließendstellung befindet, wenn sich der entsprechende Schieber 28 bzw. 30 am vorderen bzw. hinteren Anschlag der Führung 26 (in Fig. 1B am linken bzw. rechten Ende) befindet. Vorzugsweise ist das Bedienelement 24 so angeordnet, daß die Führung 26 in Dachlängsrichtung verläuft und die Schieberichtung der Schieber 28 bzw. 30 der Verstellrichtung der Antriebselemente 18 bzw. 20 entspricht.

Wenn der Lamellenverbund 12 ausgehend von der in Fig. 1 dargestellten Schließstellung von vom nach hinten geöffnet werden soll, wird der vordere Schieber 28 (in Fig. 1B der linke Schieber) nach hinten (d.h. in Fig. 1B nach rechts) geschoben, was die Steuerelektronik veranlaßt, das vordere Antriebselement 18 nach hinten zu verschieben, wodurch zunächst die Windabweiserlamelle 22 ausgestellt und dann der Lamellenverbund 12 nach hinten geschoben wird, wobei beginnend mit der letzten Lamelle 14b die Lamellen 14 nach und nach in bekannter Weise ausgestellt und in dieser Position parallel übereinander geschoben werden, wobei sich schließlich, wenn der vordere Schieber 28 ganz nach hinten geschoben wurde, am hinteren Rand der Dachöffnung 16 ein Lamellenpaket bildet.

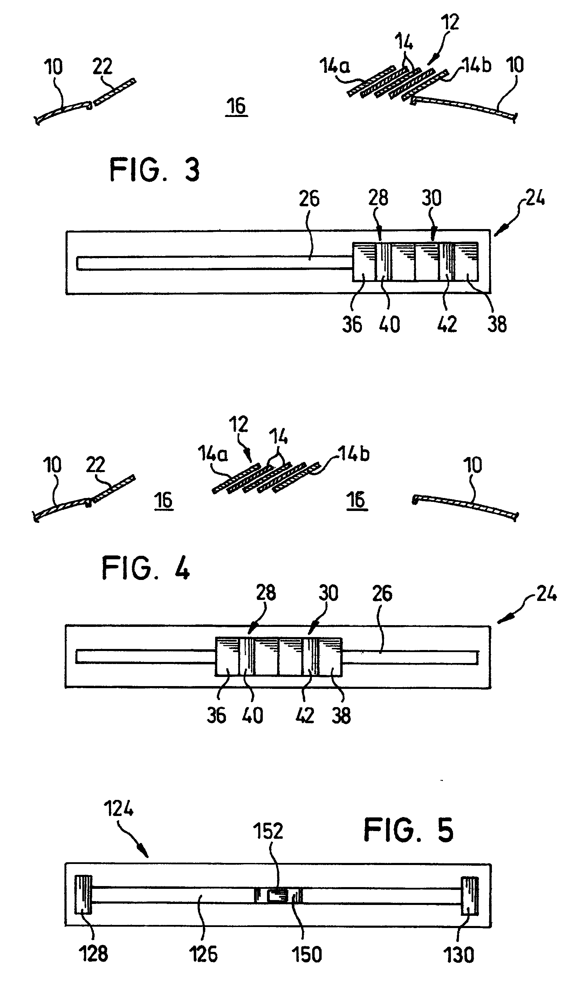

Die Längsabmessung der Basen 36 und 38 der beiden Schieber 28 bzw. 30 ist gerade so gewählt, daß, wenn die beiden Schieber 28 bzw. 30 aneinander anliegen, wie dies in Fig. 3 dargestellt ist, der Abstand der beiden Betätigungselemente 40 bzw. 42 der Längsabmessung des zusammengeschobenen Lamellenpakets entspricht, d. h. der Abstand der beiden Betätigungselemente 40 bzw. 42 entspricht im Verhältnis zu dem Verschiebeweg der Schieber 28, 30 in etwa der Längsabmessung des Lamellenpakets im Verhältnis zum Verschiebeweg der Antriebselemente 18 bzw. 20.

Aus der in Fig. 3 dargestellten Stellung kann die Dachöffnung 16 wieder verschlossen werden, indem der vordere Schieber 28 wieder nach vorn zum vorderen Anschlag der Führung 26 geschoben wird, was eine entsprechende Verschiebung des vorderen Antriebselements 18 und damit ein zu dem beschriebenen Öffnungsvorgang umgekehrtes Schließen des Lamellenverbundes 12 bewirkt.

Alternativ kann jedoch auch, wie in Fig. 4 dargestellt, das zusammengeschobene Lamellenpaket als Ganzes entlang der Dachöffnung 16 verschoben werden, indem die beiden Schieber 28 bzw. 30 in der aneinander liegenden Stellung gemeinsam entlang der Führung 26 verschoben werden. Der Lamellenverbund 12 kann aus jeder beliebigen Stellung in seine Schließstellung gebracht werden, indem die beiden Schieber 28, 30 wieder getrennt und zu ihren jeweiligen Anschlägen geschoben werden.

Ferner ist es auch möglich, aus der in Fig. 4 dargestellten Stellung die Dachöffnung 16 nur zum Teil zu schließen, indem nur einer der beiden Schieber 28, 30 in Richtung auf seinen Anschlag hin geschoben wird.

Es ist auch möglich, ausgehend von der in Fig. 1A und B dargestellten Schließstellung, die Dachöffnung 16 statt von vorn nach hinten von hinten nach vorn zu öffnen, indem der hintere Schieber 30 nach vorn geschoben wird, bis er an dem vorderen Schieber 28 anliegt, was dazu führt, daß sich am vorderen Ende der Dachöffnung 16 ein Lamellenpaket bildet.

Die in Fig. 5 dargestellte zweite Ausführungsform des Bedienelements, die mit 124 bezeichnet ist, unterscheidet sich von der in Fig. 1 bis 4 beschriebenen Ausführungsform dadurch, daß das zusammengeschobene Lamellenpaket statt durch die entsprechende Wahl der Längsabmessungen der Basen 36, 38 der Schieber 28 bzw. 30 durch ein Distanzstück 150 simuliert wird, das in einer Führung 126, in welcher zwei Schieber 128 bzw. 130 zwischen zwei Anschlägen verschiebbar geführt sind, frei verschiebbar ist. Das Distanzstück 150 ist mit einem Taster 152 versehen, welcher bei Betätigung durch den Bediener die Steuerelektronik veranlaßt, aus jeder beliebigen Stellung den Lamellenverbund 12 in seine Schließstellung zu bringen. Zusätzlich können dabei die Schieber 128 bzw. 130 durch einen nicht dargestellten Hilfsantrieb in ihre der Schließstellung des Lamellenverbunds 12 entsprechende Endstellung verfahren werden. Ansonsten ist das Bedienelement 124 in analoger Weise zu der in Fig. 1B bis 4 beschriebenen ersten Ausführungsform aufgebaut. In Fig. 5 ist die Schließstellung des Lamellendaches dargestellt. Beim Öffnen des Lamellenverbunds 12 verhindert das Distanzstück 150, daß die beiden Schieber 128 bzw. 130 zu nahe aufeinander geschoben werden, so daß unzulässige Dachstellungen bzw. eine Kollision der Antriebselemente 18, 20 vermieden wird. Da das Distanzstück 150 frei verschiebbar ist, können mit dem Bedienelement 124 sämtliche Dachstellungen vorgegeben werden, die durch das Bedienelement 24 in der ersten Ausführungsform vorgegeben werden können.

Anstelle des bisher beschriebenen Lamellendachs kann mit einem erfindungsgemäß ausgebildeten Bedienelement auch ein Faltdach gesteuert werden. Auch dabei wird in der bzw. den Öffnungsstellungen das Faltdach von vorn oder von hinten oder aus beiden Richtungen zugleich zu einem Paket zusammengeschoben, welches frei entlang der Dachöffnung als Ganzes verschoben werden kann. An die Stellen der Lamellen treten dabei entsprechend ausstellbare und verfahrbare Spriegel.

### Bezugszeichenliste

- feste Dachhaut: **10**
- Lamellenverbund: **12**
- Lamellen: **14, 14a, 14b**
- Dachöffnung in 10: **16**
- Antriebskabel: **17A, 17B**
- vorderes Antriebselement: **18**
- hinteres Antriebselement: **20**
- Motor: **21A, 21B**
- Windabweiserlamelle: **22**
- Bedienelement: **24, 124**
- Führung: **26, 126**
- Schieber: **28, 30, 128, 130**
- Linear-Schiebe-Potentiometer: **32, 34**
- Basis von 28, 30: **36, 38**
- Betätigungselemente von 28, 30: **40, 42**
- Distanzstück: **150**
- Schließtaster: **152**

## Patentansprüche

1. Öffnungsfähiges Fahrzeugdach mit mehreren miteinander verbundenen schwenkbaren Dachelementen (Lamellen 14, 14a und 14b), die in der Schließstellung einen flächigen Verbund (12) bilden, um eine Dachöffnung (16) zu verschließen, und zwei Antriebselemente (18 und 20) umfassen, die jeweils von einem Motor (21A bzw. 21B) in Dachlängsrichtung zu einer Öffnungsbewegung verschiebbar sind, wobei die Dachelemente so ausgebildet sind, daß sie ausgehend von der Schließstellung durch die Verschiebung eines der Antriebselemente (18 bzw. 20) von vorn bzw. von hinten unter Ausschwenken zu einem Paket zusammenschiebbar sind sowie durch gleichzeitiges Verschieben beider Antriebselemente von vorn und von hinten zu einem Paket zusammenschiebbar sind, um die Dachöffnung (16) mindestens zum Teil freizugeben, wobei das zusammengeschobene Paket in Dachlängsrichtung verschiebbar ist, sowie mit einem Bedienelement (24 bzw. 124) zum Steuern der Motoren (21A und 21B), **dadurch gekennzeichnet,** daß das Bedienelement (24 bzw. 124) zwei Schieberegler umfaßt, die jeweils einen oder beide Motoren (21A bzw. 21B) steuern und deren Schieber (28 und 30 bzw. 128 und 130) relativ zueinander in einer Ebene, jedoch nicht aneinander vorbei verschiebbar sind, und so ausgebildet ist, daß die Position jedes Schiebers jeweils in etwa der Position des entsprechenden Antriebselements (18 bzw. 20) zugeordnet ist und das zusammengeschobene Paket an dem Bedienelement simuliert wird, um eine Kollision der Antriebselemente auszuschließen.

2. Fahrzeugdach nach Anspruch 1, **dadurch gekennzeichnet,** daß die Dachelemente (Lamellen 14, 14a und 14b) ein Lamellendach (Verbund 12) bilden, wobei sie in der Stellung als zusammengeschobenes Paket parallel zueinander ausgeschwenkt sind.

3. Fahrzeugdach nach Anspruch 1, **dadurch gekennzeichnet,** daß die Dachelemente ein Faltdach bilden.

4. Fahrzeugdach nach einem der vorhergehenden Ansprüche, **dadurch gekennzeichnet,** daß die Längsabmessung der Schieber (28 und 30) so gewählt ist, daß bei maximal aufeinander zu geschobenen Schiebern die Antriebselemente (18 und 20) gerade soweit verstellt sind, daß ein maximal zusammengeschobenes Paket gebildet wird.

5. Fahrzeugdach nach einem der Ansprüche 1 bis 3, **dadurch gekennzeichnet,** daß zwischen den beiden Schiebern (128 und 130) ein Distanzstück (150) vorgesehen ist, dessen Längsabmessung so gewählt ist, daß bei maximal aufeinander zu geschobenen Schiebern die Antriebselemente (18 und 20) gerade soweit verstellt sind, daß ein maximal zusammengeschobenes Paket gebildet wird.

6. Fahrzeugdach nach einem der vorhergehenden Ansprüche, **dadurch gekennzeichnet,** daß die Schieber (28 und 30 bzw. 128 und 130) für ihre Verschiebebewegung in einer gemeinsamen Führungsbahn geführt sind.

7. Fahrzeugdach nach einem der vorhergehenden Ansprüche, **dadurch gekennzeichnet,** daß das Bedienelement (124) einen Schalter (Taster 152) umfaßt, der bei Betätigung aus jeder Stellung veranlaßt, daß die Dachelemente (Lamellen 14, 14a und 14b) in ihre Schließstellung gebracht werden.

8. Fahrzeugdach nach Anspruch 7, sofern auf Anspruch 5 rückbezogen, **dadurch gekennzeichnet,** daß der Schalter (152) an dem Distanzstück (150) vorgesehen ist.

9. Fahrzeugdach nach einem der vorhergehenden Ansprüche, **dadurch gekennzeichnet,** daß jeder Schieber (28 und 30 bzw. 128 und 130) ein Potentiometer (32 bzw. 34) betätigt, dessen Stellung den Verstellweg des entsprechenden Motors (21A bzw. 21B) vorgibt.
